# EUROPEAN PATENT APPLICATION

(11) **EP 4 376 488 A1**
(43) Date of publication of application: **29.05.2024**
(21) Application number: 22855186.7
(22) Date of filing: 19.07.2022
(51) Int. Cl.: H04W 48/08

(54) **METHOD AND APPARATUS FOR ACCESSING CELL SERVED BY BASE STATION, STORAGE MEDIUM, AND ELECTRONIC APPARATUS**

(30) Priority: 13.08.2021 CN 202110932793
(71) Applicant: ZTE Corporation, Shenzhen, Guangdong 518057 (CN)
(72) Inventor: LI, Yong, Shenzhen, Guangdong 518057 (CN); LU, Zhaohua, Shenzhen, Guangdong 518057 (CN); WANG, Yuxin, Shenzhen, Guangdong 518057 (CN); CHEN, Yijian, Shenzhen, Guangdong 518057 (CN)
(74) Representative: Pennacchio, Salvatore Giovanni
(86) International application number: PCT/CN2022/106544
(87) International publication number: WO 2023/016203

(57) **Abstract**

Provided in embodiments of the present invention are a method and apparatus for accessing a cell served by a base station, a storage medium, and an electronic device. The method includes: a first request message is sent to a relay node, wherein the first request message is used for requesting the relay node to relay a signal between a terminal and the base station; a synchronization signal of the base station relayed by the relay node is received; and an access signal is sent to the base station by the relay node after receiving the synchronization signal, wherein the access signal is used for accessing the cell served by the base station. The problem of the difficulty of the terminal in accessing the cell served by the base station due to unavailable direct communication between the terminal and the base station in the related technologies can be solved. By relaying the synchronization signal of the base station and the access signal of the terminal through the relay node, the terminal can access the cell served by the base station.

## Description

### Cross-Reference to Related Application

The present invention claims the benefit of priority of Chinese patent application No.CN202110932793.0, entitled "METHOD AND APPARATUS FOR ACCESSING CELL SERVED BY BASE STATION, STORAGE MEDIUM, AND ELECTRONIC DEVICE", filed on August 13, 2021, the entire contents of which are incorporated herein by reference.

### Technical Field

Embodiments of the present invention relate to the communication field, and specifically to, a method and apparatus for accessing a cell served by a base station, a storage medium, and an electronic device.

### Background

In wireless communication, a relay node is used for relaying signals between a base station and a terminal to improve the quality of communication. For example, the base station and the terminal are blocked by obstacles, the signals of direct communication between the base station and the terminal becomes weaker, and by using the relay node to relay the signals between the base station and the terminal, blocking by the obstacles can be avoided, thereby enhancing the signal strength at a receiving end between the base station and the terminal. For another example, the distance between the base station and the terminal is relatively large, the signals of direct communication between the base station and the terminal becomes weaker, and by using the relay node to relay the signals between the base station and the terminal, the signal strength at the receiving end between the base station and the terminal can be improved.

The relay node adopts a manner of customizing the terminal to relay the signals between the terminal and the base station, thereby preventing interference and relaying the interference. In a case that the terminal has access to a cell represented by the base station, signal receiving and transmitting between the terminal and the base station are scheduled by the base station; and when scheduling the receiving and transmitting of the signals between the base station and the terminal, the base station schedules the relay node to align a wave beam with the terminal, thereby completing the relaying of the received and transmitted signals between the base station and the terminal by the relay node. Before the terminal has access to the cell represented by the base station, the terminal needs to receive a synchronous signal transmitted by the base station and transmit an access signal to the base station to implement cell access. However, the terminal and the base station cannot directly receive and transmit the synchronous signal of the base station and the access signal of the terminal, making it difficult for the terminal to access the cell represented by the base station.

No solution has been proposed to solve the problem of the difficulty of the terminal in accessing the cell served by the base station due to unavailable direct communication between the terminal and the base station in the related technologies.

### Summary

Embodiments of the present invention provide a method and apparatus for accessing a cell served by a base station, a storage medium, and an electronic device, so as to at least solve the problem of the difficulty of a terminal in accessing the cell served by the base station due to unavailable direct communication between the terminal and the base station in the related technologies.

According to an embodiment of the present invention, a method for accessing a cell served by a base station is provided and applied to a terminal, and includes:
sending a first request message to a relay node, where the first request message is used for requesting the relay node to relay a signal between the terminal and the base station;
a synchronization signal of the base station relayed by the relay node is received; and
after receiving the synchronization signal, an access signal is sent to the base station by the relay node, where the access signal is used for accessing the cell served by the base station.

According to another embodiment of the present invention, a method for accessing a cell served by a base station is further provided and applied to a relay node, and includes:
a first request message sent by a terminal is received, where the first request message is used for requesting relaying of a signal between the terminal and the base station;
a synchronization signal of the base station to the terminal is relayed; and
an access signal sent by the terminal is received, and the access signal is relayed to the base station, where the access signal is used for accessing the cell served by the base station.

According to another embodiment of the present invention, an apparatus for accessing a cell served by a base station is further provided and applied to a terminal, and includes:
a first message sending module, configured to send a first request message to a relay node, where the first request message is used for requesting the relay node to relay a signal between the terminal and the base station;
a signal receiving module, configured to receive a synchronization signal of the base station relayed by the relay node; and
a signal sending module, configured to send, by the relay node, an access signal to the base station after receiving the synchronization signal, where the access signal is used for accessing the cell served by the base station.

According to another embodiment of the present invention, an apparatus for accessing a cell served by a base station is further provided and applied to a relay node, and includes:
a first request receiving module, configured to receive a first request message sent by a terminal, where the first request message is used for requesting relaying of a signal between the terminal and the base station;
a first relay module, configured to relay a synchronization signal of the base station to the terminal; and
a second relay module, configured to receive an access signal sent by the terminal, and relay the access signal to the base station, where the access signal is used for accessing the cell served by the base station.

According to another embodiment of the present invention, further provided is a computer-readable storage medium, and the storage medium stores a computer program, wherein the computer program is configured to execute the steps in any one of the above method embodiments during running.

According to another embodiment of the present invention, further provided is an electronic device, including a memory and a processor. The memory stores a computer program, and the processor is configured to run the computer program so as to execute the steps of any one of the above method embodiments.

According to the embodiments of the present invention, the first request message is sent to the relay node, where the first request message is used for requesting the relay node to relay the signal between the terminal and the base station; the synchronization signal of the base station relayed by the relay node is received; and after receiving the synchronization signal, the access signal is sent to the base station by the relay node, where the access signal is used for accessing the cell served by the base station. The problem of the difficulty of the terminal in accessing the cell served by the base station due to unavailable direct communication between the terminal and the base station in the related technologies can be solved. By relaying the synchronization signal of the base station and the access signal of the terminal through the relay node, the terminal can access the cell served by the base station.

### Brief Description of the Drawings

Fig. 1 is a block diagram of a hardware structure of a mobile terminal for a method for accessing a cell served by a base station according to an embodiment of the present invention;
Fig. 2 is a first flowchart of a method for accessing a cell served by a base station according to an embodiment of the present invention;
Fig. 3 is a second flowchart of a method for accessing a cell served by a base station according to an embodiment of the present invention;
Fig. 4 is a first block diagram of an apparatus for accessing a cell served by a base station according to an embodiment of the present invention; and
Fig. 5 is a second block diagram of an apparatus for accessing a cell served by a base station according to an embodiment of the present invention.

### Detailed Description of the Embodiments

Embodiments of the present invention are described in detail with reference to accompanying drawings and in conjunction with embodiments as below.

It is to be noted that terms such as "first" and "second" of the specification and claims of the present invention and the above accompanying drawings are used to distinguish similar objects but are unnecessarily used to describe specific sequences or precedence orders.

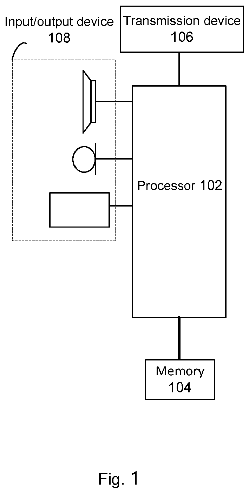

The method embodiments provided in the embodiments of the present invention may be performed in a mobile terminal, a computer terminal, or similar arithmetic units. Taking operation on the mobile terminal as an example, Fig. 1 is a block diagram of a hardware structure of a mobile terminal for a method for accessing a cell served by a base station according to an embodiment of the present invention. As shown in Fig. 1, the mobile terminal may include one or more (only one is shown in Fig. 1) processors 102 (the processor 102 may include but not limited to a microcontroller unit (MCU), or a field-programmable gate array (FPGA), or another processing unit) and a memory 104 configured to store data. The mobile terminal may further include a transmission device 106 used for a communication function and an input and output device 108. Those of ordinary skill in the art can understand that the structure shown in Fig. 1 is merely illustrative, and does not limit the structure of the above mobile terminal. For example, the mobile terminal may further include more or fewer components than shown in Fig. 1, or have a different configuration than that shown in Fig. 1.

The memory 104 may be configured to store a computer program, such as a software program and a module of application software, and a computer program corresponding to the method for accessing a cell served by a base station in this embodiment of the present invention. The processor 102 performs, by running the computer program stored in the memory 104, various functional applications and business chain address pool slice processing, thereby implementing the above method. The memory 104 may include a high-speed random access memory, and may also include a non-volatile memory, such as one or more magnetic storage apparatuses, a flash memory, or another nonvolatile solid-state memory. In some examples, the memory 104 may further include memories which are remotely set relative to the processor! 02, and these remote memories may be connected to the mobile terminal through networks. The examples of the above networks include but not limited to an Internet, an intranet, a local area network, a mobile communication network, and a combination thereof.

The transmission device 106 is configured to receive or send data through a network. A specific example of the above networks may include a wireless network provided by a communication supplier of the mobile terminal. In an example, the transmission device 106 includes a network interface controller (NIC) which can be connected with other network devices through the base station so as to communicate with the Internet. In an example, the transmission device 106 may be a radio frequency (RF) module configured to communicate with the Internet in a wireless manner.

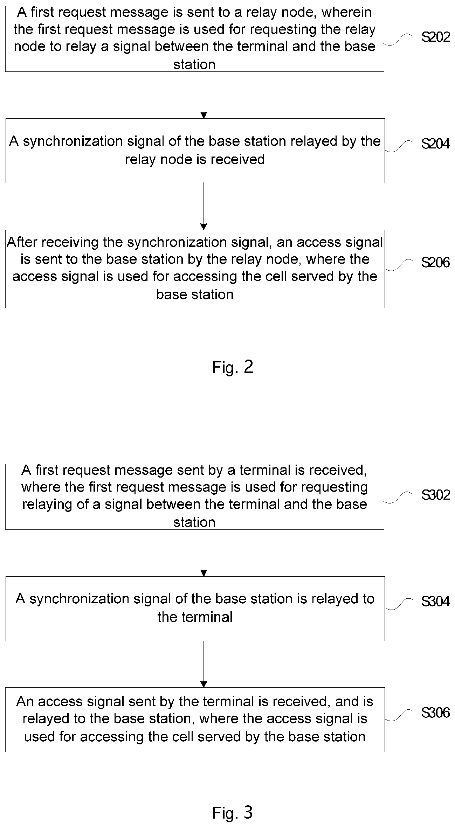

This embodiment provides a method for accessing a cell served by a base station operating on the above mobile terminal or network architecture. Fig. 2 is a first flowchart of a method for accessing a cell served by a base station according to an embodiment of the present invention. As shown in Fig. 2, the method is applied to the terminal, and the process includes the following steps:
Step S202: a first request message is sent to a relay node, wherein the first request message is used for requesting the relay node to relay a signal between the terminal and the base station;

In this embodiment, the relay node refers to a communication node that implements a relay function, such as a relay or a repeater, intelligent surfaces, and a terminal with the relay function.

Step S204: a synchronization signal of the base station relayed by the relay node is received; and
Step S206: after receiving the synchronization signal, an access signal is sent to the base station by the relay node, where the access signal is used for accessing the cell served by the base station.

Through steps S202 to S206, the problem of the difficulty of the terminal in accessing the cell served by the base station due to the unavailable direct communication between the terminal and the base station in the related technologies can be solved. By relaying the synchronization signal of the base station and the access signal of the terminal through the relay node, the terminal can access the cell served by the base station.

In an embodiment, before step S204, a response message for the first request message sent by the relay node is received, and the response message is used for indicating agreement on the relaying of the signal between the terminal and the base station, or refusal on the relaying of the signal between the terminal and the base station.

Specifically, when the response message indicates agreement on the relaying of the signal between the terminal and the base station, the response message carries a sending time of the synchronization signal; and when the response message indicates refusal on the relaying of the signal between the terminal and the base station, the response message carries a next sending time of the first request message.

Further, when the response message indicates refusal on the relaying of the signal between the terminal and the base station, the response message carries a reason for the refusal on the relaying of the signal between the terminal and the base station.

In another embodiment, before step S202, indication information sent by the relay node is received, where the indication information is used for indicating transmitting time information of the synchronization signal or a readiness status of processing the first request message. The readiness status includes a busy status or an idle status.

In another embodiment, after step S204, confirmation information is sent to the relay node. The confirmation information is used for confirming that the synchronization signal is received. The confirmation information carries a terminal identifier, and the terminal identifier is configured to indicate the withdrawal of relay resources allocated to the terminal by the relay node.

Further, the confirmation information may further carry a second request message. The second request message is used for requesting the relay node to relay the access signal to the base station.

In another embodiment, before step S206, the second request message may also be sent to the relay node. The second request message is used for requesting the relay node to relay the access signal to the base station.

In this embodiment, the terminal submits the first request message to the relay node, and receives the synchronization signal of the base station. After receiving the synchronization signal of the base station, the access signal is sent to the base station, where the first request message is used for requesting the relay node to relay the signal between the base station and the terminal.

In wireless communication, the base station serves a specific cell and communicates with a terminal in the corresponding cell. The base station serving the cell is a base station corresponding to the cell. The cell represented by the base station is the cell served by the base station. The relay node is configured to relay the signal between the base station and the terminal. Relay resources of the relay node are limited, for example, only limited wave beams can be generated to be aligned with the terminal, or even only one wave beam can be generated to be aligned with the terminal. The relay resources of the relay node are limited. For another example, the relay node has a limited processing capacity, which can only provide relaying to limited terminals in the same time period, or even only provide relaying to one terminal. For terminals that do not access the cell represented by the base station, the relay node does not know whether to allocate the relay resources to these terminals, and which terminal needs to be allocated with the relay resources. Therefore, in a case that the terminal cannot directly receive the synchronization signal transmitted by the base station, and the base station cannot receive the access signal transmitted by the terminal, the terminal cannot receive the synchronization signal transmitted by the base station through the relaying of the relay node, and the base station cannot receive the access signal transmitted by the terminal, that is, the terminal cannot access the cell represented by the base station. In a solution of the present invention, the terminal submits the first request message to the relay node, and the first request message includes the signal between the base station and the terminal relayed by the relay node; after receiving the first request message, the relay node knows which terminal needs the relay resources or which terminal needs the relaying of the signal between the terminal and the base station, so as to allocate the relay resources to the terminal or relay the signal between the terminal and the base station for the terminal; for example, the wave beam used for being aligned with the terminal is generated, or a wave beam used for being aligned with one surface of the terminal is aligned with the terminal; and therefore, through the relaying of the relay node, the terminal receives the synchronization signal of the base station and transmits the access signal to the base station, so as to complete access of the terminal to the cell represented by the base station. The first request message includes the signal between the base station and the terminal relayed by the relay node, or the relay resources to the terminal allocated or provided by the relay node, or the signal of the base station need to be received by the terminal, or the signal to the base station transmitted by the terminal. Alternatively, the first request message includes the relay resources to the terminal allocated or provided by the relay node, or the signal of the base station received by the terminal, or the signal to the base station need to be transmitted by the terminal, all of which may be considered as the first request message including the signal between the base station and the terminal relayed by the relay node. The first request message includes the signal between the base station and the terminal relayed by the relay node, namely, requesting the relay mode to relay the signal between the base station and the terminal.

The first request message allows the relay node to identify which terminal has a request for signal relaying, enabling the relay node to relay the signal for the terminal, such that the terminal accesses the cell represented by the base station.

The synchronization signal is used for achieving synchronization in signal receiving and transmitting between the terminal and the base station, and the terminal synchronizes with the base station by receiving the synchronization signal transmitted by the base station. Based on the synchronization between the terminal and the base station, the terminal transmits the access signal to the base station, and the base station receives the access signal, such that the terminal accesses the cell represented by the base station. The access signal is used for achieving the access of the terminal to the cell represented by the base station, and the access of the terminal is implemented by the base station receiving the access signal of the terminal.

In the first request message, the terminal specifically requests the relay node to relay the synchronization signal of the base station. Since the base station has regularity in synchronization signal transmission and periodically performs transmission at a specific time window, the relay node relays the synchronization signal for the terminal at the time window where the base station transmits the synchronization signal, thereby saving relay time resources, improving a request response rate, and increasing a success rate of the access of the terminal to the cell.

The first request message includes resources for relaying the synchronization signal to the terminal allocated or provided by the relay node, or the synchronization signal of the base station received by the terminal, or the access signal to the base station transmitted by the terminal, each of which is considered as the first request message specifically including the synchronization signal of the base station for the terminal relayed by the relay node. The first request message specifically includes the synchronization signal of the base station for the terminal relayed by the relay node, that is, the terminal specifically requests the relay node to relay the synchronization signal of the base station for the terminal.

The first request message is specifically further used for requesting the relay node to relay the access signal transmitted by the terminal to the base station. In the first request message, the terminal specifically requests the relay node to relay the access signal transmitted to the base station. Due to the time window property of the access signal, the relay node prepares relay resources based on the characteristics of the access signal, thereby saving relay time resources, and also increasing the success rate of the access of the terminal to the cell.

The first request message includes resources for relaying the access signal to the terminal allocated or provided by the relay node, or the access signal to the base station transmitted by the terminal, each of which is considered as the first request message specifically including the access signal transmitted by the terminal to the base station relayed by the relay node. The first request message specifically includes the access signal transmitted by the terminal to the base station relayed by the relay node, that is, the terminal specifically requests the relay node to relay the access signal transmitted by the terminal to the base station.

The relay node relays the synchronization signal of the base station for the terminal, and relays the access signal sent to the base station. In a scenario, the terminal only requests the relay node to relay the synchronization signal of the base station for the terminal, and does not expect the relay node to relay the access signal of the terminal. In another scenario, the terminal only requests the relay node to relay the access signal transmitted by the terminal to the base station, and does not expect the relay node to relay the synchronization signal of the base station for the terminal. In another scenario, the terminal expects the relay node to relay both the synchronization signal of the base station for the terminal and the access signal transmitted to the base station. To differentiate from the above two scenarios, the first request message specifically includes relaying, by the relay node, the synchronization signal of the base station for the terminal, and the access signal transmitted to the base station, that is, the relay node is specifically requested to relay the synchronization signal of the base station for the terminal, and the access signal transmitted to the base station.

In an embodiment, before receiving the synchronization signal of the base station, a response of the relay node to the first request message is received, and the response indicates one of the following: acceptance and refusal.

After receiving the first request message, the relay node responds to the terminal about the first request message, such that the terminal determines whether the relay node relays the signal for the terminal, and accordingly the terminal can prepare subsequent behaviors based on the response. A message indicated by the response is acceptance, meaning that the relay node agrees to relay the signal for the terminal. The other message indicated by the response is refusal, meaning that the relay node does not agree to relay the signal for the terminal.

Corresponding to the response indicating acceptance, the response further specifically indicates time information of relaying the signal between the terminal and the base station in following two manners that corresponding to the message indicated by the response being acceptance, the response further indicates the time information of relaying the signal between the terminal and the base station; and corresponding to the message indicated by the response being acceptance, the response indicates the message indicated by the response being acceptance by specifically indicating the time information of relaying the signal between the terminal and the base station.

Corresponding to the response indicating acceptance, the response further specifically indicates transmitting time information of the synchronization signal in following two manners that corresponding to the message indicated by the response being acceptance, the response further indicates the transmitting time information of the synchronization signal; and corresponding to the message indicated by the response being acceptance, the response indicates the message indicated by the response being acceptance by specifically indicating the transmitting time information of the synchronization signal.

Corresponding to the response indicating refusal, the response further specifically indicates time information of a next first request message in following two manners that corresponding to the message indicated by the response being refusal, the response further indicates the time information of the next first request message; and corresponding to the message indicated by the response being refusal, the response indicates the message indicated by the response being refusal by specifically indicating the time information of the next first request message.

Corresponding to the response indicating refusal, the response further specifically indicates the reason for the refusal in following two manners that corresponding to the message indicated by the response being refusal, the response further indicates the reason for the refusal; and corresponding to the message indicated by the response being refusal, the response indicates the message indicated by the response being refusal by specifically indicating the reason for the refusal.

The response indicates the time information of relaying the signal between the terminal and the base station, such that terminal can receive the signal of the base station or send the signal to the base station based on the time information, indicated by the response, of relaying the signal between the terminal and the base station, thereby preventing the terminal from ineffectively receiving or transmitting the signal.

The response indicates the transmitting time information of the synchronization signal, such that the terminal can receive the synchronization signal of the base station according to the transmitting time information of the synchronization signal indicated by the response, thereby preventing the terminal from ineffectively receiving the synchronization signal.

The response indicates the time information of submitting the first request message next time, such that the terminal can propose to send the first request message according to the time information, indicated by the response, of submitting the first request message next time.

The response indicates the reason for the refusal, such as temporary unavailability of relay resources, or being busy, and the terminal can submit the first request message again after a period of time.

Corresponding to the response indicating acceptance, the response further specifically indicates the time information of relaying the signal between the terminal and the base station; corresponding to the response indicating acceptance, the response further specifically indicates the transmitting time information of the synchronization signal; corresponding to the response indicating refusal, the response further specifically indicates the time information of submitting the first request message next time; and corresponding to the response indicating refusal, the response further specifically indicates the reason for the refusal. The behavior is determined based on the response, and includes one of the following: corresponding to the response indicating acceptance, receiving the synchronization signal of the base station according to the response; and corresponding to the response indicating refusal, submitting the first request message again according to the response.

Before the terminal submits the first request message to the relay node, indication information of the relay node is received. The indication information includes one of the following: transmitting time information of the synchronization signal, and a preparation status for processing the first request message.

Before the terminal submits the first request message, the relay node sends indication information to the terminal. The indication information includes transmitting time information of the synchronization signal. The terminal can determine, according to the time information, whether to send the first request message and when to send the first request message. For example, the transmitting time information of the synchronization signal is about the time when there is a synchronization signal, such that the terminal can determine, according to the information, whether to receive the synchronization signal at this time. For another example, the transmitting time information of the synchronization signal indicates a half-frame where there is a synchronization signal, such that the terminal can determine, according to the information, whether to receive the synchronization signal in the half-frame. For another example, the transmitting time information of the synchronization signal indicates a time point before which there may be a synchronization signal, such that the terminal determines, on that basis, whether to submit the first request message, and the time of submitting the first request message. For another example, the transmitting time information of the synchronization signal indicates a time point after which there may be a synchronization signal, such that the terminal determines, on that basis, whether to submit the first request message, and the time of submitting the first request message. For another example, the transmitting time information of the synchronization signal indicates a time point before which the terminal can submit the first request message, such that the terminal determines, on that basis, whether to submit the first request message, and the time of submitting the first request message. For another example, the transmitting time information of the synchronization signal indicates a time point after which the terminal can submit the first request message, such that the terminal determines, based on the information, whether to submit the first request message, and the time of submitting the first request message. For another example, the transmitting time information of the synchronization signal indicates a time window within which the terminal can submit the first request message, such that the terminal determines, based on the information, whether to submit the first request message, and the time of submitting the first request message. The terminal receives the time information of the synchronization signal, or the relay node interrupts the time information of the synchronization signal, each of which may be considered as the transmitting time information of the synchronization signal of the base station. The terminal determines, according to the transmitting time information of the synchronization signal, whether to send the first request message, and when to send the first request message, thereby improving effectiveness of sending the first request message, avoiding ineffective sending of the first request message, so as to reduce system interference, and meanwhile reduce the workload of the relay node.

Before the terminal submits the first request message, the relay node sends indication information to the terminal, and the indication information includes a preparation status that the relay node processes the first request message. For example, the preparation status that the relay node processes the first request message is busy, indicating that it is not ready to process the first request message, and the terminal can determine not to submit the first request message temporarily according to the information. For example, the preparation status that the relay node processes the first request message is idle, and the terminal can determine to submit the first request message according to the information if having a demand for receiving the synchronization signal. For example, the preparation status that the relay node processes the first request message may also be prepared or not prepared. Corresponding to being prepared, the terminal can submit the first request message according to the information; and corresponding to being not prepared, the terminal may not submit the first request message according to the information. The preparation status that the relay node processes the first request message may also be allowed or not allowed. Corresponding to being allowed, the terminal can submit the first request message according to the information. Corresponding to being not allowed, the terminal may not submit the first request message according to the information. The terminal determines whether to submit the first request message according to the indication information about the preparation status that the relay node processes the first request message, thereby improving effectiveness of receiving the first request message by the relay node, and avoiding the ineffective first request message, so as to avoid unnecessary interference to the system, and the workload of the relay node in response to the first request message.

After the synchronization signal of the base station is received, confirmation information is sent to the relay node, and the confirmation information confirms receiving of the synchronization signal. After receiving the synchronization signal of the base station, the terminal sends the confirmation information to the relay node, and the confirmation information confirms receiving of the synchronization signal, such that after receiving the confirmation information, the relay node can withdraw resources for relaying the synchronization signal, thereby saving the relay resources, and improving use efficiency of the relay resources. The confirmation information may be confirmation information that is predefined. The confirmation information may include a receiving status for information confirmation. The confirmation information may include the type of a received signal. The confirmation information may include an identifier of a terminal receiving the signal. The confirmation information may include an identifier of the first request message.

After receiving the synchronization signal and before transmitting the access signal to the base station, a second request message is sent to the relay node. The second request message includes the access signal transmitted by the terminal relayed to the base station by the relay node. The manner of sending the second request message includes one of the following: sending confirmation information to the relay node, where the confirmation information confirms receiving of the synchronization signal, and the second request message is included in the confirmation information; and relative to the confirmation information, separately sending the second request message.

After receiving the synchronization signal and before transmitting the access signal to the base station, the terminal requests, in the second request message, the relay node to relay the access signal transmitted to the base station, such that the relay node prepares, at a precise time, resources for relaying the access signal, thereby avoiding no preparation for the resources for relaying the access signal, and also preventing excessive preparation of the resources for relaying the access signal, avoiding a waste of resources.

The second request message includes resources for relaying the access signal allocated or provided to the terminal by the relay node, or the access signal need to transmit to the base station by the terminal, each of which is considered as the second request message specifically including the access signal transmitted by the terminal relayed to the base station by the relay node. The second request message specifically includes relaying the access signal transmitted by the terminal relayed to the base station by the relay node, that is, the terminal specifically requests the relay node to relay the access signal transmitted by the terminal to the base station.

One manner of sending the second request message to the relay node includes: sending confirmation information to the relay node, where the confirmation information confirms receiving of the synchronization signal, and the second request message is included in the confirmation information. The other manner of sending the second request message to the relay node includes: separately sending of the second request message relative to the confirmation information.

According to another embodiment of the present invention, a method for accessing a cell served by a base station is further provided. Fig. 3 is a second flowchart of a method for accessing a cell served by a base station according to an embodiment of the present invention. As shown in Fig. 3, the method is applied to a relay node, and the process includes the following steps:
Step S302: a first request message sent by a terminal is received, where the first request message is used for requesting relaying of a signal between the terminal and the base station.
Step S304: a synchronization signal of the base station is relayed to the terminal.

In this embodiment, step S304 specifically may include: configuring relay resources to the terminal; receiving the synchronization signal sent by the base station; and relaying the synchronization signal to the terminal according to the relay resources.

Step S306: an access signal sent by the terminal is received, and is relayed to the base station, where the access signal is used for accessing the cell served by the base station.

Through steps S302 to S306, the problem of the difficulty of the terminal in accessing the cell served by the base station due to unavailable direct communication between the terminal and the base station in the related technologies can be solved. By relaying the synchronization signal of the base station and the access signal of the terminal through the relay node, the terminal can access the cell served by the base station.

In an embodiment, after step S304, it is possible to determine whether the terminal receives the synchronization signal, and specifically, confirmation information sent by the terminal is received, is used for confirming that the terminal receives the synchronization signal, and carries a terminal identifier; and according to the terminal identifier, the relay resources configured to the terminal are withdrawn, thereby avoiding a waste of relay resources.

In another embodiment, after step S302, a response message for the first request message is sent to the terminal, and the response message is used for indicating agreement on the relaying of the signal between the terminal and the base station, or refusal on the relaying of the signal between the terminal and the base station.

Specifically, when the response message indicates agreement on the relaying of the signal between the terminal and the base station, the response message carries a sending time of the synchronization signal; and when the response message indicates refusal on the relaying of the signal between the terminal and the base station, the response message carries a next sending time of the first request message.

Further, when the response message indicates refusal on the relaying of the signal between the terminal and the base station, the response message carries a reason for the refusal on the relaying of the signal between the terminal and the base station.

In another embodiment, before step S302, indication information is sent to the terminal, where the indication information is used for indicating transmitting time information of the synchronization signal or a readiness status of processing the first request message. The readiness status includes a busy status or an idle status.

In another embodiment, before step S306, a second request message sent by the terminal is received, and the second request message is used for requesting relaying of the access signal to the base station.

In this embodiment, the relay node receives the first request message of the terminal, and relays the synchronization signal of the base station to the terminal; and then relays the access signal sent by the terminal to the base station, where the first request message is used for requesting the relay node to relay the signal between the base station and the terminal.

Further, the first request message is specifically used for requesting the relay node to relay the synchronization signal of the base station for the terminal; and the first request message is specifically used for requesting the relay node to relay the access signal sent by the terminal to the base station. The first request message is specifically used for requesting the relay node to relay the synchronization signal of the base station for the terminal, and relay the access signal sent to the base station.

Before the relay node relays the synchronization signal of the base station for the terminal, the relay node makes a response to the first request message, and the response indicates one of the following: acceptance and refusal.

Corresponding to the response indicating acceptance, the response further specifically indicates time information of relaying the signal between the terminal and the base station; corresponding to the response indicating acceptance, the response further specifically indicates transmitting time information of the synchronization signal; corresponding to the response indicating refusal, the response further specifically indicates time information of submitting the first request message next time; and corresponding to the response indicating refusal, the response further specifically indicates a reason for the refusal. Following behaviors are performed corresponding to the response. The behavior includes one of the following: corresponding to the response indicating acceptance, relaying the synchronization signal of the base station to the terminal; and corresponding to the response indicating refusal, not relaying the synchronization signal of the base station to the terminal.

In an embodiment, before receiving the first request message of the terminal, indication information is sent to the terminal. The indication information includes one of the following: transmitting time information of the synchronization signal, and a preparation status for processing the first request message.

In another embodiment, after relaying the synchronization signal of the base station to the terminal, confirmation information of the terminal is received, and the confirmation information confirms that the terminal receives the synchronization signal.

In another embodiment, after relaying the synchronization signal of the base station to the terminal and before relaying the access signal sent by the terminal to the base station, a second request message of the terminal is received, and the second request message includes the access signal sent by the terminal to the base station relayed by the relay node. The manner of receiving the second request message includes one of the following: receiving confirmation information of the terminal, where the confirmation information confirms that the terminal receives the synchronization signal, and the second request message is included in the confirmation information; and relative to the confirmation information, separately receiving the second request message.

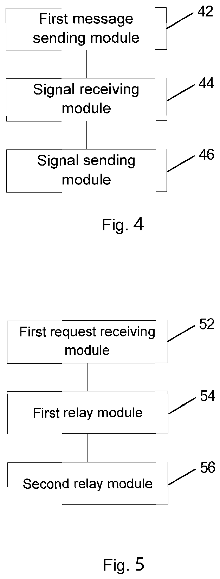

According to another embodiment of the present invention, an apparatus for accessing a cell served by a base station is further provided. Fig. 4 is a first block diagram of an apparatus for accessing a cell served by a base station according to an embodiment of the present invention. As shown in Fig. 4, the apparatus is applied to a terminal, and includes:
a first message sending module 42, configured to send a first request message to a relay node, where the first request message is used for requesting the relay node to relay a signal between the terminal and the base station;
a signal receiving module 44, configured to receive a synchronization signal of the base station relayed by the relay node; and
a signal sending module 46, configured to send, by the relay node, an access signal to the base station after receiving the synchronization signal, where the access signal is used for accessing the cell served by the base station.

In an exemplary embodiment, the apparatus further includes:
a receiving response module, configured to receive a response message for the first request message sent by the relay node, where the response message is used for indicating agreement on the relaying of the signal between the terminal and the base station, or refusal on the relaying of the signal between the terminal and the base station.

In an exemplary embodiment, when the response message indicates agreement on the relaying of the signal between the terminal and the base station, the response message carries a sending time of the synchronization signal; and
when the response message indicates refusal on the relaying of the signal between the terminal and the base station, the response message carries a next sending time of the first request message.

In an exemplary embodiment, when the response message indicates refusal on the relaying of the signal between the terminal and the base station, the response message carries a reason for the refusal on the relaying of the signal between the terminal and the base station.

In an exemplary embodiment, the apparatus further includes:
a first information receiving module, configured to receive indication information sent by the relay node, where the indication information is used for indicating transmitting time information of the synchronization signal or a readiness status of processing the first request message, and the readiness status includes a busy status or an idle status.

In an exemplary embodiment, the apparatus further includes:
a first information sending module, configured to send confirmation information to the relay node, where the confirmation information is used for confirming that the synchronization signal is received, the confirmation information carries a terminal identifier, and the terminal identifier is configured to indicate the withdrawal of relay resources allocated to the terminal by the relay node.

In an exemplary embodiment, the confirmation information carries a second request message, where the second request message is used for requesting the relay node to relay the access signal to the base station.

In an exemplary embodiment, the apparatus further includes:
a second message sending module, configured to send a second request message to the relay node, where the second request message is used for requesting the relay node to relay the access signal to the base station.

According to another embodiment of the present invention, an apparatus for accessing a cell served by a base station is further provided. Fig. 5 is a second block diagram of an apparatus for accessing a cell served by a base station according to an embodiment of the present invention. As shown in Fig. 5, the apparatus is applied to a relay node, and includes:
a first request receiving module 52, configured to receive a first request message sent by a terminal, where the first request message is used for requesting relaying of a signal between the terminal and the base station;
a first relay module 54, configured to relay a synchronization signal of the base station to the terminal; and
a second relay module 56, configured to receive an access signal sent by the terminal, and relay the access signal to the base station, where the access signal is used for accessing the cell served by the base station.

In an exemplary embodiment, the first relay module 54 includes:
a configuration submodule, configured to configure relay resources to the terminal;
a receiving submodule, configured to receive the synchronization signal sent by the base station; and
a relay submodule, configured to relay the synchronization signal to the terminal according to the relay resources.

In an exemplary embodiment, the apparatus further includes:
a second information receiving module, configured to receive confirmation information sent by the terminal, where the confirmation information is used for confirming that the terminal receives the synchronization signal, and carries a terminal identifier; and
a withdraw module, configured to withdraw, according to the terminal identifier, the relay resources allocated to the terminal.

In an exemplary embodiment, the apparatus further includes:
a sending response module, configured to send a response message for the first request message to the terminal, where the response message is used for indicating agreement on the relaying of the signal between the terminal and the base station, or refusal on the relaying of the signal between the terminal and the base station.

In an exemplary embodiment, when the response message indicates agreement on the relaying of the signal between the terminal and the base station, the response message carries a sending time of the synchronization signal; and
when the response message indicates refusal on the relaying of the signal between the terminal and the base station, the response message carries a next sending time of the first request message.

In an exemplary embodiment, when the response message indicates refusal on the relaying of the signal between the terminal and the base station, the response message carries a reason for the refusal on the relaying of the signal between the terminal and the base station.

In an exemplary embodiment, the apparatus further includes:
a second information sending module, configured to send indication information to the terminal, where the indication information is used for indicating transmitting time information of the synchronization signal or a readiness status of processing the first request message, and the readiness status includes a busy status or an idle status.

In an exemplary embodiment, the apparatus further includes:
a second request receiving module, configured to receive a second request message sent by the terminal, where the second request message is used for requesting relaying of the access signal to the base station.

An embodiment of the present invention further provides a computer-readable storage medium, and the computer-readable storage medium stores a computer program. The computer program is configured to execute the steps in any one of the above method embodiments when running.

In an exemplary embodiment, the above computer-readable storage medium may include but not limited to: a U disk, a read-only memory (ROM), a random access memory (RAM), a mobile hard disk, a magnetic disk or a compact disc or other media capable of storing the computer program.

An embodiment of the present invention further provides an electronic device including a memory and a processor. The memory stores a computer program, and the processor is configured to execute the computer program so as to perform the steps in any one of the above method embodiments.

In an exemplary embodiment, the above electronic device may further include a transmission device and an input and output device. The transmission device is connected with the above processor, and the input and output device is connected with the above processor.

For specific examples in this embodiment, reference may be made to the examples described in the above embodiments and exemplary implementations, which will not be described in detail in this embodiment.

Obviously, those skilled in the art should understand that the modules or steps in the present invention may be implemented through a universal computing device, which may be centralized in a single computing device or distributed in a network formed by multiple computing devices, and may be implemented by executable program code of the computing device, such that the modules or steps may be stored in a storage apparatus to be executed by the computing device; and in some cases, the shown or described steps may be executed in a different order than presented here, or the modules or steps may be made into various integrated circuit modules, or more of the modules or steps may be made into a single integrated circuit module to be implemented. Therefore, the present invention is not limited to any specific hardware and software combination.

The above contents are merely preferred embodiments of the present invention, and are not intended to limit the present invention, and for those skilled in the art, the present invention may have various modifications and changes. Any modification, equivalent replacement, improvement, etc. made within the principle of the present invention shall fall within the scope of protection of the present invention.

## Claims

1. A method for accessing a cell served by a base station, applied to a terminal, comprising:
sending a first request message to a relay node, wherein the first request message is used for requesting the relay node to relay a signal between the terminal and the base station;
receiving a synchronization signal of the base station relayed by the relay node; and
sending, by the relay node, an access signal to the base station after receiving the synchronization signal, wherein the access signal is used for accessing the cell served by the base station.

2. The method according to claim 1, wherein before receiving a synchronization signal of the base station relayed by the relay node, the method further comprises:
receiving a response message sent by the relay node in response to the first request message, wherein the response message is used for indicating agreement on the relaying of the signal between the terminal and the base station, or refusal on the relaying of the signal between the terminal and the base station.

3. The method according to claim 2, wherein
when the response message indicates agreement on the relaying of the signal between the terminal and the base station, the response message carries a sending time of the synchronization signal; and
when the response message indicates refusal on the relaying of the signal between the terminal and the base station, the response message carries a next sending time of the first request message.

4. The method according to claim 3, wherein
when the response message indicates refusal on the relaying of the signal between the terminal and the base station, the response message carries a reason for the refusal on the relaying of the signal between the terminal and the base station.

5. The method according to any one of claims 1 to 4, wherein before sending a first request message to a relay node, the method further comprises:
receiving indication information sent by the relay node, wherein the indication information is used for indicating transmitting time information of the synchronization signal or a readiness status of processing the first request message, and the readiness status comprises a busy status or an idle status.

6. The method according to any one of claims 1 to 4, wherein after receiving a synchronization signal of the base station relayed by the relay node, the method further comprises:
sending confirmation information to the relay node, wherein the confirmation information is used for confirming that the synchronization signal is received, the confirmation information carries a terminal identifier, and the terminal identifier is configured to indicate the withdrawal of relay resources allocated to the terminal by the relay node.

7. The method according to claim 6, wherein
the confirmation information carries a second request message, wherein the second request message is used for requesting the relay node to relay the access signal to the base station.

8. The method according to any one of claims 1 to 4, wherein before sending, by the relay node, an access signal to the base station, the method further comprises:
sending a second request message to the relay node, wherein the second request message is used for requesting the relay node to relay the access signal to the base station.

9. A method for accessing a cell served by a base station, applied to a relay node, comprising:
receiving a first request message sent by a terminal, wherein the first request message is used for requesting relaying of a signal between the terminal and the base station;
relaying a synchronization signal of the base station to the terminal; and
receiving an access signal sent by the terminal, and relaying the access signal to the base station, wherein the access signal is used for accessing the cell served by the base station.

10. The method according to claim 9, wherein the relaying a synchronization signal of the base station to the terminal comprises:
configuring relay resources to the terminal;
receiving the synchronization signal sent by the base station; and
relaying the synchronization signal to the terminal according to the relay resources.

11. The method according to claim 10, wherein after relaying the synchronization signal of the base station to the terminal, the method further comprises:
receiving confirmation information sent by the terminal, wherein the confirmation information is used for confirming that the terminal receives the synchronization signal, and carries a terminal identifier; and
withdrawing the relay resources allocated to the terminal according to the terminal identifier.

12. The method according to claim 9, wherein after receiving a first request message sent by a terminal, the method further comprises:
sending a response message for the first request message to the terminal, wherein the response message is used for indicating agreement on the relaying of the signal between the terminal and the base station, or refusal on the relaying of the signal between the terminal and the base station.

13. The method according to claim 12, wherein
when the response message indicates agreement on the relaying of the signal between the terminal and the base station, the response message carries a sending time of the synchronization signal; and
when the response message indicates refusal on the relaying of the signal between the terminal and the base station, the response message carries a next sending time of the first request message.

14. The method according to claim 13, wherein
when the response message indicates refusal on the relaying of the signal between the terminal and the base station, the response message carries a reason for the refusal on the relaying of the signal between the terminal and the base station.

15. The method according to any one of claims 9 to 14, wherein before receiving a first request message sent by a terminal, the method further comprises:
sending indication information to the terminal, wherein the indication information is used for indicating transmitting time information of the synchronization signal or a readiness status of processing the first request message, and the readiness status comprises a busy status or an idle status.

16. The method according to any one of claims 9 to 14, wherein before receiving an access signal sent by the terminal, and relaying the access signal to the base station, the method further comprises:
receiving a second request message sent by the terminal, wherein the second request message is used for requesting relaying of the access signal to the base station.

17. An apparatus for accessing a cell served by a base station, applied to a terminal, comprising:
a first message sending module, configured to send a first request message to a relay node, wherein the first request message is used for requesting the relay node to relay a signal between the terminal and the base station;
a signal receiving module, configured to receive a synchronization signal of the base station relayed by the relay node; and
a signal sending module, configured to send, by the relay node, an access signal to the base station after receiving the synchronization signal, wherein the access signal is used for accessing the cell served by the base station.

18. An apparatus for accessing a cell served by a base station, applied to a relay node, comprising:
a first request receiving module, configured to receive a first request message sent by a terminal, wherein the first request message is used for requesting relaying of a signal between the terminal and the base station;
a first relay module, configured to relay a synchronization signal of the base station to the terminal; and
a second relay module, configured to receive an access signal sent by the terminal, and relay the access signal to the base station, wherein the access signal is used for accessing the cell served by the base station.

19. A computer readable storage medium, the storage medium storing a computer program, wherein the computer program is configured to perform, when executed by a processor, the method as claimed in any one of claims 1 to 8 and 9 to 16.

20. An electronic device, comprising a memory and a processor, wherein the memory stores a computer program, and the processor is configured to execute the computer program to perform the method as claimed in any one of claims 1 to 8 and 9 to 16.
